# EUROPEAN PATENT SPECIFICATION

(11) **EP 1 359 335 B1**
(45) Date of publication and mention of the grant of the patent: **23.04.2008**
(21) Application number: 03009732.3
(22) Date of filing: 02.05.2003
(51) Int. Cl.: F16C 27/02, F16C 27/04, F16C 17/03, F16F 15/023

(54) **Assembly with an elastically mounted bearing with an oil damper and a method of manufacturing thereof**
Anordnung mit einem elastisch montierten, ölgedämpften Lager und ein Verfahren zur Herstellung der Anordnung
Dispositif de palier avec un support de palier élastique avec amortisseur à huile et procédé de fabrication du dispositif

(30) Priority: 02.05.2002 US 137767
(43) Date of publication of application: 05.11.2003
(60) Divisional application: 05000410.0
(73) Proprietor: DRESSER-RAND COMPANY, Olean, NY 14760 (US)
(72) Inventor: Dourlens, Herve H., 76110 Goderville (FR); Marshall, Dale F., Le Havre 76600 (FR); Auber, Philippe, Le Havre 76620 (FR)
(74) Representative: HOFFMANN EITLE

(56) References cited:
- EP-A- 1 300 600
- DE-A- 2 847 979
- DE-C- 620 365
- US-A- 3 473 853
- US-A- 4 027 931
- US-A- 4 097 094
- US-A- 4 134 309
- US-A- 5 215 384
- US-A- 5 215 385
- US-A- 5 356 226
- US-A- 5 425 584
- US-A- 5 738 445

## Description

### Background

This invention relates to a bearing assembly for a rotor, and, more particularly, to a bearing assembly involving a bearing cage that extends between the rotating member and a bearing housing.

In many bearing designs of the above type, it is necessary to have a fairly precise engagement between the bearing cage and the bearing housing that will be sufficient through the range of manufacturing clearances of these components, yet will maintain a positive seal at the joint between the housing and cage. Also, it is important that the bearing geometry be controlled and that the clamping force not be high enough to cause bending or deformity.

Reference is made to US-A-5,215,385, which discloses a gas-lubricated bearing comprising a rotor, a sleeve of which is surrounded by a stationary shaft support itself surrounded by a stator. The shaft support is formed at each end with an annular space extending from the respective end to a central portion of the shaft support, thereby providing respective circumferential membranes which are quite thin in the radial direction and therefore flexible. In this way, the shaft support can deflect radially inwardly and outwardly like a spring. A clearance is defined between, on the one hand, the outer surfaces of the circumferential membranes and the support central portion and, on the other hand, the inner surface of the stator.

In US-A-4,027,931, there is disclosed a bearing assembly in which a rotor shaft is supported within an outer stationary housing through intermediary of a cylindrical member having a pair of end covers extending inwardly to retain a series of tilt shoe bearings in contact with the shaft surface. Oil is supplied through the outer housing, a clearance between the outer housing and the movable member, and the movable member itself towards the tilt bearings.

Reference is also directed to US-A-4,134,309, in which a rotor shaft is carried by tandem bearings 15,17 which are surrounded by inner and outer cylindrical members nested one inside the other with an annular clearance between them and connected by a radially extending flange serving as a mechanical spring. The amount of displacement between the inner and outer cylindrical members is determined by the lateral force and the counteracting spring force produced by the radially extending flange.

European Patent Application 1 300 600 A published after the priority date of the present application is an earlier patent application by the same Applicant as for this patent application and describes the embodiments shown in Figures 1 and 2 of the present patent application.

US Patent 3, 473, 853 discloses a rotor bearing assembly comprising a spring element welded to an outer ring and a bearing sleeve welded to a housing. The housing is provided with axial grooves defining the cantilever spring. A space between the spring element and the sleeve welded to the housing defines an oil filled clearance.

The present invention seeks to provide improvement in movement damping provided by the oil filled clearance and improvement to the formation of the spring support members. According to the invention there is provided a bearing assembly for a rotor, the assembly comprising: a cage for surrounding the rotor, a housing surrounding the cage, at least one axially-extending groove formed in the housing to form a cantilevered portion extending between the groove and the corresponding surface of the cage to form a mechanical spring, a clearance formed between a portion of the radial outer surface of the cage and the corresponding portion of the inner surface of the housing, and a passage extending through the housing and registering with the clearance for passing oil to the clearance; said assembly being characterised by said mechanical spring being unitary with the material of the housing, the clearance being radially inwards of the material of the housing, and of said mechanical spring.

### Brief Description of the Drawings

For a better understanding of the invention and to show how the same may be carried into effect, reference will now be made, by way of example, to the accompanying drawings, in which:-
Fig. 1 is a cross-sectional view of the bearing assembly according to EP 1 300 600 A, shown in operative engagement with a rotor, which is shown in elevation.
Fig. 2 is an enlarged cross-sectional view of a portion of the bearing assembly of Fig. 1.
Figs. 3 and 4 are views, similar to Figs. 1 and 2, respectively, but depicting a first embodiment of the present invention.
Figs. 5 and 6 are views, similar to figs. 1 and 2, respectively, but depicting an alternative embodiment of the present invention.

### Detailed Description

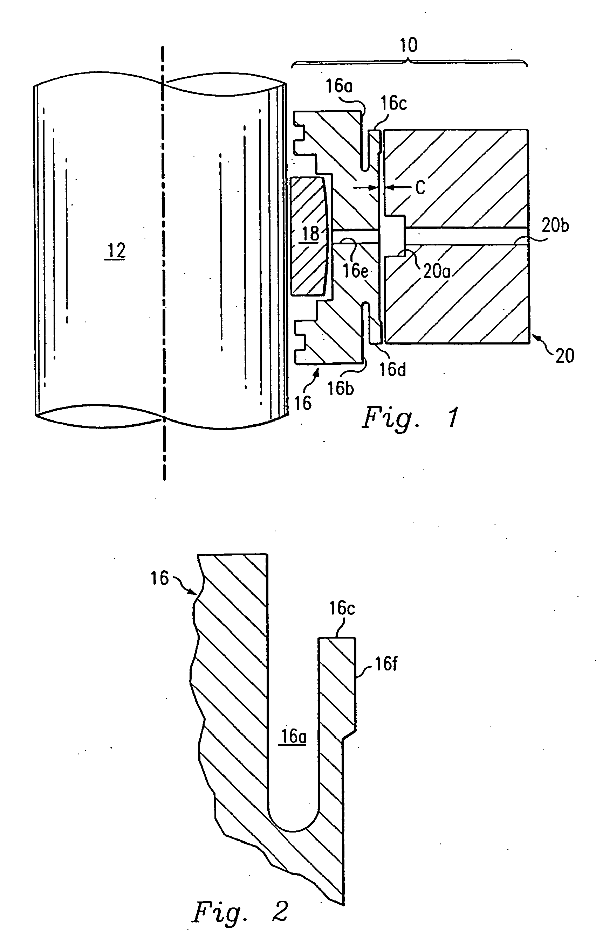

Referring to Fig. 1 of the drawings, the reference numeral 10 refers in general to a bearing assembly as described in EP 1 300 600 A which surrounds a rotor 12. It is understood that the rotor 12 is rotated about its axis and forms part of an assembly that includes a driving system for imparting torque to the rotor, in a conventional manner.

An annular bearing cage 16 extends around the rotor 12 and has an internal recess formed therein for receiving a series of tilt pads 18, one of which is shown, which form the bearing members. Since the tilt pads 18 are conventional, they will not be described in detail.

Two axially-extending grooves 18a and 18b are formed in the outer periphery or the cage 16 with each extending for approximately 180 degrees. The grooves 18a and 18b are spaced radially inwardly from the outer radial surface of the cage 16 a predetermined amount to form cantilevered portions 18c and 18d that extend radially outwardly from the respective grooves. The thickness of each cantilevered portion 16c and 16d is such that it functions as a mechanical spring. It is understood that the thickness of each portion 18c and 18d, and therefore the stiffness of the mechanical spring formed by each portion, can be adjusted relative to the bearing stiffness of the tilt pads 18.

A radially-extending passage 16e is formed through the center of the cage 18 for supplying lubricating oil to the tilt pad 18, in a manner to be explained.

An annular housing 20 surrounds the cage 16 and has an internal annular recess 20a which communicates with the passage 18e of the cage 18 and with a radially-extending through passage 20b. Oil can thus be introduced to the passage 20b and passes through the latter passage, the recess 20a and the passage 16e for supplying oil to the tilt pads 18.

A majority of the radial inner surface of the housing 20 is slightly spaced from ure radial outer surface of the cage 16. including the cantilevered portions 16c and 16d, to form an annular clearance C which communicates with the recess 20a of the housing 20 and thus receives some of the above-mentioned oil.

As better shown in Fig. 2, the axial end portion of the radial outer surface of each cantilevered portions 10c and 16d is enlarged as shown by the reference numeral 16f in connection with the cage portion 16c. The enlarged portions. Including the portion 16f, project radially outwardly from the plane of the latter portions. Although the enlarged portion 16f is shown slightly spaced from the corresponding inner surfaces of the housing 20 in Fig.1 in the interest of clarity, the enlarged portions actually engage the latter surfaces in an interference fit to prevent the leakage of oil from the clearance C. Also, the axial lengths of the enlarged portions, including the portion 16f are designed to minimize contact stresses between the cage 16 and the housing 20.

The system 10 thus has the following advantages:
1. A relatively low clamping force acts on the bearing housing 20 to eliminate the risk of deformation end leakage.
2. No deformation of the inside of the cage 16 occurs where the tilt pads 16 contact the cage, allowing a much better control of the tilt pad bearing geometry.
3. There is less sensitivity to temperature effects on the housing 20 resulting in minimum deleterious effects on the interference fit between the enlarged portions, including portion 18f, of the cantilevered portions 16c and 16d and the corresponding surfaces of the housing 20.
4. The presence of the oil in the clearance C provides additional damping of the bearing assembly 10 in general, thus significantly increasing the damping provided to the rotor 12.

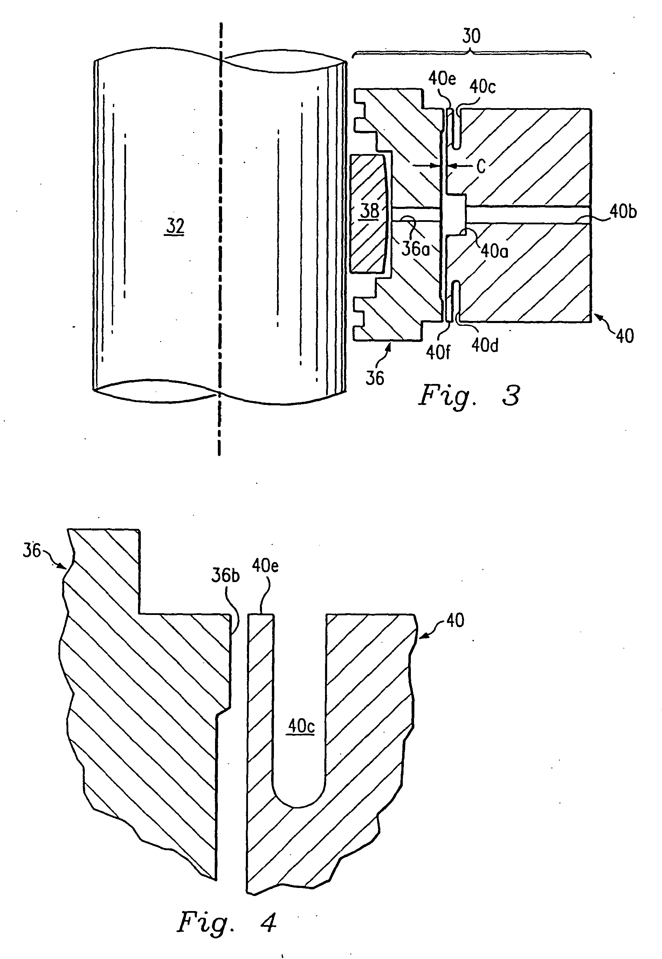

Referring to Fig. 3. the reference numeral 30 refers, in general, to the bearing assembly according to a first embodiment of the invention. The bearing assembly 30 surrounds a rotor 32 which is rotated about its axis and forms part of an assembly that includes a driving system for imparting torque to the rotor, in a conventional manner.

An annular bearing cage 36 extends around the rotor 32 and has an internal recess formed therein for deceiving a series of tilt pads 38, one of which is shown, which form the bearing members. Since the tilt pads 38 are conventional they will not be described in detail. A radially-extending passage 36a is formed through the center of the cage 36 for supplying lubricating oil to the tilt pad 38, in a manner to be explained.

An annular housing 40 surrounds the cage 38 and has an internal annular recess 40a which communicates with the passage 36a of the cage 38 and with a radially-extending through passage 40b. Oil can thus be introduced to the passage 40b and passes through the latter passage, the recess 40a and the passage 36a for supplying oil to the tilt pads 38.

Two axially-extending grooves 40c and 40d are formed in the outer periphery or me housing 40 and each extends for approximately 180 degrees. The grooves 40c and 40d are spaced radially outwardly from the inner radial surface of the housing 40 a predetermined amount to form cantilevered portions 40e and 40f that extend radially inwardly from the respective grooves. The thickness of each cantilevered portion 40e and 40f is such that it functions as a mechanical spring. It is understood that the thickness of each cantilevered portion 40e and 40f, and therefore the stiffness of the mechanical spring formed by each portion, can be adjusted relative to the bearing stiffness of the tilt pads 38.

A majority of the radial inner surface of the housing 40, including the cantilevered portions 40e and 40t, is radially spiced from the radial outer surface of the cage 36 to form an annular clearance C which communicates with the recess 40a of the housing 40 and thus receives some of the above-mentioned oil.

As better shown in Fig. 4, an axial and portion 38b of the radial outer surface of the cage 36 is enlarged so as to project radially outwardly from the plans of the latter portion. Although Fig. 3 depicts the end portion 36b slightly spaced from the corresponding inner surfaces of the housing 40 in the interest of clarity, it actually engages the latter surfaces in an interference fit to prevent the leakage of oil from the clearance C. Also, the axial length of the enlarged and portion 36b is designed to minimize contact stresses between the cage 38 and the housing 40.

Thus, the embodiment of Figs. 3 and 4 enjoys all the advantages of the embodiment of Figs. 1 and 2 set forth above.

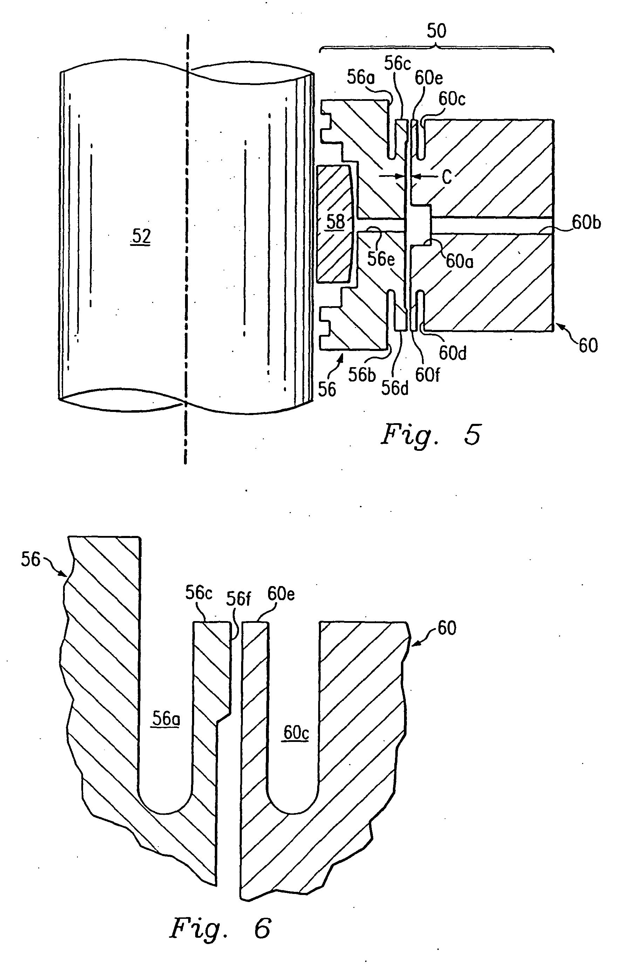

A bearing assembly according to a second embodiment of the invention is shown, in general by the reference numeral 50 in Figs. 5 and 6. As shown in Fig. 5. the bearing assembly 50 surrounds a rotor 52 which is rotated about its axis and forms part of an assembly that includes a driving system for imparting torque to the rotor, in a conventional manner.

An annular bearing cage 58 extends around the rotor 52 and has an internal recess formed therein for receiving a series of tilt pads 58, one of which is shown, which form the bearing members. Since the tilt pads 58 are conventional, they will not be described in detail.

Two axially-extending grooves 56a and 56b are formed in the outer periphery of the cage 56 with each extending for approximately 180 degrees. The grooves 56a and 56b are spaced radially inwardly from the outer radial surface of the cage 56 a predetermined amount to form cantilevered portions 56c and 56d that extend radially outwardly from the respective grooves. The thickness of each cantilevered portion 56c and 56d is such that it functions as a mechanical spring. The thickness of each cage portion 56c and 56d, and therefore the stiffness of the mechanical spring formed by each portion, can be adjusted relative to the bearing stiffness of the tilt pads 58.

A radially-extending passage 56a is formed through the canter of the cage 56 for supplying lubricating oil to the tilt pad 58, in a manner to be explained.

An annular housing 60 surrounds the cage 56 and has an internal annular recess 60a which communicates with the passage 56e of the cage 56 and with a radialty-extending through passage 80b. Oil can thus be introduced to the passage 60b and passes through the latter passage, the recess 60a, and the passage 56e for supplying oil to the tilt pads 56.

A majority of the radial inner surface of the housing 60 is slightly spaced from the radial outer surface or the cage 66, including the cantilevered portions 56c and 56d, to form an annular clearance C which communicates with the recess 60a of the housing 60 and thus receives some of the above-mentioned off.

As better shown in Fig. 6. the axial end portion of the radial outer surface of each cantilevered portions 56c and 56d is enlarged as shown by the reference numeral 56f in connection with the cage portion 56c. The enlarged portions, including the portion 56f, project radially outwardly from the plane of the latter portions and engages the corresponding inner surfaces of the housing 60 in art interference fit. Although the enlarged portions, including the portion 56f, are shown slightly spaced from the corresponding inner surfaces of the housing 60 in Figs. 5 and 6 in the interest of clarity, they actually engage the latter surfaces in an interference fit to prevent the leakage of oil from the clearance C. Also, the axial lengths of the enlarged portions, including the portion 56f, are designed to minimize contact stresses between the cage 56 and the housing 60.

Two axially-extending grooves 60c and 60d are formed in the outer periphery of the housing 60 and each extends for approximately 180 degrees. The grooves 60c and 60d are spaced radially outwardly from the inner radial surface of the housing 60 a predetermined amount to form cantilevered portions 80a and 80f that extend radially inwardly from the respective grooves. The thickness of each cantilevered portion 60a and 60f is such that it functions as a mechanical spring. The thickness of each cantilevered portion 60e and 60f, and therefore the stiffness of the mechanical spring formed by each portion, can be adjusted relative to the bearing stiffness of the tilt pads 58.

Thus, the embodiment of Figs. 5 and 6 enjoys all the advantages of the embodiment of Figs. 1 and 2, and the embodiment of Figs. 3 and 4.

It is understood that variations may be made in each of the above embodiments without departing from the scope of the invention as defined by the appended claims. For example, the number of angularly-speced grooves formed in the cage and the housing in each of the above embodiments can vary and, in fact, there can be only one groove that is continuous in an angular direction. Also, the radial and axial lengths of the cage portions, including the enlarged portions, can vary from those shown in the drawings. Also, the sealing between the housings and their respective cages can be done by other means than metal-to-metal contact as shown on the drawings. Further, the cages and/or the housings can be formed by two split arcuate sections that are attached at their respective ends, in a conventional manner.

Since other modifications, changes, and substitutions are intended in the foregoing disclosure, it is appropriate that the appended claims be construed broadly and in a manner consistent with the scope of the invention.

## Claims

1. A bearing assembly for a rotor (32, 52), the assembly comprising:
a cage (36,56) for surrounding the rotor (32,52);
a housing (40,60) surrounding the cage (36,56);
at least one axially-extending groove (40c, 40d, 60c, 60d) formed in the housing (40,60) to form a cantilevered portion (40e, 40f, 60e, 60f) extending between the groove (40c, 40d, 60c, 60d) and the corresponding surface of the cage (36, 56) to form a mechanical spring;
a clearance (C) formed between a portion of the radial outer surface of the cage (36, 56) and the corresponding portion of the inner surface of the housing (40,60); and
a passage (40b, 60b) extending through the housing (40, 60) and registering with the clearance (c)for passing oil to the clearance(c), said assembly being **characterised by** said mechanical spring (60e, 40e) being unitary with the material of the housing (40, 60), the clearance (C) being radially inwards of the material of the housing (40, 60), and of said mechanical spring (60e, 40e).

2. A bearing assembly according to claim 1, comprising:
at least one axially-extending groove (56a) formed in the cage (56) to form a cantilevered portion (56c) extending between the groove (56a) and the corresponding surface of the housing (60) to form a further mechanical spring (56c), unitary with the material of the cage (56).

3. The assembly of claim 1, further comprising:
a recess formed in the radial inner surface of the cage (36, 56); a passage (36a, 56a) extending through the cage (36,56) and from the clearance (c) to the recess for receiving the oil from the clearance (c) and passing it to the recess; and
plural tilt pads (38, 58) disposed in the recess for receiving the oil and adapted to engage the rotor (32,52).

4. The assembly of claim 1 or 2, wherein a first portion of the radial outer surface of the cage (36, 56) extends in a slightly spaced relation to the corresponding portion of the inner surface of the housing (40,60) to form the clearance (C), and a second portion (36b, 56b) of the radial outer surface of the cage (36, 56) projects from the first portion in a radial direction, engages the corresponding portion of the inner surface of the housing (40, 60) and is disposed at the respective axial end portions of the cage to prevent oil leakage from the clearance (C).

5. The assembly of claim 1, 2, or 3 wherein the cage (36, 56) and the housing (20) are annular.

6. The assembly of claim 1, wherein a second axially-extending groove (40c, 60c) is formed in the housing (40, 60) to form a further cantilevered portion (40e, 60e) extending between the second groove (40c, 60d) and the corresponding surface of the cage (36, 56).

7. The assembly of any one of the preceding claims, wherein the at least one axially-extending groove (56a, 60c, 40c) is a plurality of angularly-spaced grooves to form a plurality of cantilevered portions (40e, 56c, 60e), respectively.

8. The assembly of any one of the preceding claims wherein the at least one axially-extending groove (56a, 60c, 40c) is a continuous annular groove.

9. The assembly of claim 2, wherein a second axially-extending groove (56a) is formed in the cage (36) to form a further cantilevered portion (56c, 56f) extending between the second groove (56a) and the corresponding surface of the housing (60).

## Patentansprüche

1. Lageranordnung für einen Rotor (32, 52), wobei die Anordnung enthält:
einen Käfig (36, 56), welcher den Rotor (32, 52) umgibt;
ein Gehäuse (40, 60), welches den Käfig (36, 56) umgibt;
zumindest eine sich axial erstreckende Nut (40c, 40d, 60c, 60d), welche im Gehäuse (40, 60) ausgebildet ist, um einen Ausleger-Abschnitt (40e, 40f, 60e, 60f) auszubilden, welcher sich zwischen der Nut (40c, 40d, 60c, 60d) und der entsprechenden Oberfläche von dem Käfig (36, 56) erstreckt, um eine mechanische Feder auszubilden;
eine Aussparung (C), welche zwischen einem Abschnitt von der radialen Außenoberfläche von dem Käfig (36, 56) und dem entsprechenden Abschnitt von der Innenoberfläche von dem Gehäuse (40, 60) ausgebildet ist; und
einen Durchgang (40b, 60b), welcher sich durch das Gehäuse (40, 60) erstreckt und zur Aussparung (C) anschließt, um Öl an die Aussparung (C) zu leiten, wobei die Anordnung **dadurch gekennzeichnet ist, dass** die mechanische Feder (60e, 40e) einstückig mit dem Material von dem Gehäuse (40, 60) ist, wobei die Aussparung (C) radial innerhalb des Materials von dem Gehäuse (40, 60) und von der mechanischen Feder (60e, 40e) ist.

2. Lageranordnung nach Anspruch 1, welche enthält:
zumindest eine sich axial erstreckende Nut (56a), welche in dem Käfig (56) ausgebildet ist, um einen Ausleger-Abschnitt (56c) auszubilden, welcher sich zwischen der Nut (56a) und der entsprechenden Oberfläche von dem Gehäuse (60) erstreckt, um eine weitere mechanische Feder (56c) auszubilden, welche mit dem Material von dem Käfig (56) einstückig ist.

3. Anordnung nach Anspruch 1, welche ferner enthält:
eine Ausnehmung, welche in der radialen Innenoberfläche von dem Käfig (36, 56) ausgebildet ist; einen Durchgang (36a, 56a), welcher sich durch den Käfig (36, 56) und von der Aussparung (C) zu der Ausnehmung erstreckt, zur Aufnahme des Öls von der Aussparung (C) und Weiterleitung dessen an die Ausnehmung; und
mehrere Neigeblöcke (38, 58), welche in der Ausnehmung zur Aufnahme des Öls angeordnet sind, und dazu angepasst sind, mit dem Rotor (32, 52) in Eingriff zu stehen.

4. Anordnung nach Anspruch 1 oder 2, bei welcher sich ein erster Abschnitt von der radialen Außenoberfläche von dem Käfig (36, 56) in einer leicht beabstandeten Beziehung zu dem entsprechenden Abschnitt von der Innenoberfläche von dem Gehäuse (40, 60) erstreckt, um die Aussparung (C) auszubilden, und ein zweiter Abschnitt (36b, 56b) von der radialen Außenoberfläche von dem Käfig (36, 56) von dem ersten Abschnitt in einer radialen Richtung hervorsteht, den entsprechenden Abschnitt von der Innenoberfläche von dem Gehäuse (40, 60) in Eingriff nimmt, und an den jeweiligen axialen Endabschnitten von dem Käfig angeordnet ist, um eine Ölleckage von der Aussparung (C) zu verhindern.

5. Anordnung nach Anspruch 1, 2 oder 3, bei welcher der Käfig (36, 56) und das Gehäuse (20) ringförmig sind.

6. Anordnung nach Anspruch 1, bei welcher eine zweite sich axial erstreckende Nut (40c, 60c) in dem Gehäuse (40, 60) ausgebildet ist, um einen weiteren Ausleger-Abschnitt (40e, 60e) auszubilden, welcher sich zwischen der zweiten Nut (40c, 60d) und der entsprechenden Oberfläche von dem Käfig (36, 56) erstreckt.

7. Anordnung nach einem der vorangehenden Ansprüche, bei welcher die zumindest eine sich axial erstreckende Nut (56a, 60c, 40c) eine Mehrzahl aus winklig beabstandeten Nuten ist, um jeweils eine Mehrzahl von Ausleger-Abschnitten (40e, 56c, 60e) auszubilden.

8. Anordnung nach einem der vorangehenden Ansprüche, bei welcher die zumindest eine sich axial erstreckende Nut (56a, 60c, 40c) eine durchgängig ringförmige Nut ist.

9. Anordnung nach Anspruch 2, bei welcher eine zweite sich axial erstreckende Nut (56a) in dem Käfig (36) ausgebildet ist, um einen weiteren Ausleger-Abschnitt (56c, 56f) auszubilden, welcher sich zwischen der zweiten Nut (56a) und der entsprechenden Oberfläche von dem Gehäuse (60) erstreckt.

## Revendications

1. Ensemble de roulement pour un rotor (32, 52), l'ensemble comprenant :
une cage (36, 56) destinée à entourer le rotor (32, 52) ;
un logement (40, 60) entourant la cage (36, 56) ;
au moins une rainure s'étendant de manière axiale (40c, 40d, 60c, 60d) formée dans le logement (40, 60) pour former une partie en porte-à-faux (40e, 40f, 60e, 60f) s'étendant entre la rainure (40c, 40d, 60c, 60d) et la surface correspondante de la cage (36, 56) pour former un ressort mécanique ;
un jeu (C) formé entre une partie de la surface externe radiale de la cage (36, 56) et la partie correspondante de la surface interne du logement (40, 60) ; et
un passage (40b, 60b) s'étendant à travers le logement (40, 60) et correspondant avec le jeu (c) pour faire passer del'huile vers le jeu (c), ledit ensemble étant **caractérisé par** ledit ressort mécanique (60e, 40e) étant unitaire avec le matériau du logement (40, 60), le jeu (C) se trouvant radialement vers l'intérieur du matériau du logement (40, 60), et dudit ressort mécanique (60e, 40e).

2. Ensemble de roulement selon la revendication 1, comprenant :
au moins une rainure s'étendant de manière axiale (56a) formée dans la cage (56) pour former une partie en porte-à-faux (56c) s'étendant entre la rainure (56a) et la surface correspondante du logement (60) pour former un ressort mécanique supplémentaire (56c), unitaire avec le matériau de la cage (56).

3. Ensemble selon la revendication 1, comprenant de plues :
un évidement formé dans la surface interne radiale de la cage (36, 56), un passage (36a, 56a) s'étendant à travers la cage (36, 56) et depuis le jeu (c) vers l'évidement pour recevoir l'huile provenant du jeu (c) et le traversant vers l'évidement ; et
plusieurs tampons d'inclinaison (38, 58) disposés dans l'évidement pour recevoir l'huile et adaptés pour engager le rotor (32, 52).

4. Ensemble selon la revendication 1 ou 2, dans lequel une première partie de la surface externe radiale de la cage (36, 56) s'étend dans une relation légèrement espacée vers la partie correspondante de la surface interne du logement (40, 60) pour former le jeu (C), et une deuxième partie (36b, 56b) de la surface externe radiale de la cage (36, 56) fait saillie depuis la première partie dans un sens radial, s'engage avec la partie correspondante de la surface interne du logement (40, 60) et est disposée au niveau des parties d'extrémité axiales respectives de la cage pour empêcher une fuite d'huile du jeu (C).

5. Ensemble selon la revendication 1, 2 ou 3, dans lequel la cage (36, 56) et le logement (20) sont annulaires.

6. Ensemble selon la revendication 1, dans lequel une deuxième rainure s'étendant de manière axiale (40c, 60c) est formée dans le logement (40, 60) pour former une partie en porte-à-faux supplémentaire (40e, 60e) s'étendant entre la deuxième rainure (40c, 60d) et la surface correspondante de la cage (36, 56).

7. Ensemble selon l'une quelconque des revendications précédentes, dans lequel la au moins une rainure s'étendant de manière axiale (56a, 60c, 40c) correspond à une pluralité de rainures espacées de manière angulaire pour former une pluralité de parties en porte-à-faux (40e, 56c, 60e), respectivement.

8. Ensemble selon l'une quelconque des revendications précédentes, dans lequel la au moins une rainure s'étendant de manière axiale (56a, 60c, 40c) est une rainure annulaire continue.

9. Ensemble selon la revendication 2, dans lequel une deuxième rainure s'étendant de manière axiale (56a) est formée dans la cage (36) pour former une partie en porte-à-faux supplémentaire (56c, 56f) s'étendant entre la deuxième rainure (56a) et la surface correspondante du logement (60).
